# EUROPÄISCHE PATENTSCHRIFT

(11) **EP 1 378 335 B1**
(45) Veröffentlichungstag und Bekanntmachung des Hinweises auf die Patenterteilung: **07.02.2007**
(21) Anmeldenummer: 03011714.7
(22) Anmeldetag: 23.05.2003
(51) Int. Cl.: B29C 45/68

(54) **Schliessmechanismus für eine Spritzgiessmaschine**
Closing mechanism for an injection moulding machine
Mécanisme de fermeture pour une machine à mouler par injection

(30) Priorität: 04.07.2002 DE 10230024
(43) Veröffentlichungstag der Anmeldung: 07.01.2004
(73) Patentinhaber: Demag Ergotech GmbH, 90571 Schwaig (DE)
(72) Erfinder: Felix, Roland, 06648 Eckartsberga (DE)
(74) Vertreter: Wilhelm, Ludwig

(56) Entgegenhaltungen:
- EP-A- 1 277 559
- WO-A-02/062557
- DE-C- 10 103 983
- FR-A- 2 358 266
- PATENT ABSTRACTS OF JAPAN vol. 1997, no. 6, 30. Juni 1997 (1997-06-30) & JP 09 029802 A (TOSHIBA MACH CO LTD), 4. Februar 1997 (1997-02-04)

## Beschreibung

Die Erfindung bezieht sich auf einen Schließmechanismus für die Schließeinheit einer Spritzgießmaschine, nach dem Oberbegriff des Patentanspruchs 1.

Bei dem aus der DE 101 03 983 C1 bekannten, als Spindeltrieb ausgebildeten Schließmechanismus dieser Art sind die die Schließ- und die Öffnungsbewegung der beweglichen Formaufspannplatte bewirkende Kugelmutter und die Verriegelungsmutter auf einer gemeinsamen Spindelwelle angeordnet und federnd derart auf Abstand gehalten, dass die Verriegelungsmutter beim Verfahren der Aufspannplatte spielbehaftet in die Gewindegänge der Spindelwelle eingreift, also kontaktlos mitläuft. In der Schließlage der Formaufspannplatte wird die Kugelmutter unter der Wirkung der von Seiten eines Schließkraftzylinders auf dem Weg über die Spindelwelle ausgeübten Schließkraft entgegen der Federkraft axial so weit verschoben, dass die Gewindegänge zwischen Verriegelungsmutter und Spindelwelle in Kontakt treten, woraufhin die Verriegelungsmutter entgegen einer weiteren Federanordnung axial an die bewegliche Formaufspannplatte angedrückt und dadurch der Bremsspalt einer zwischen Aufspannplatte und Verriegelungsmutter angeordneten Reibbremse geschlossen wird. In Folge der so erzielten, drehfesten Arretierung der Verriegelungsmutter an der Formaufspannplatte wird der Spindeltrieb gesperrt und die Schließkraft unter Umgehung der Kugelmutter über die Gewindeverbindung zwischen Spindelwelle und Verriegelungsmutter an die bewegliche Formaufspannplatte übertragen. Ein derartiger Schließmechanismus bietet zwar einen wirksamen Überlastschutz für die Kugelmutter eines kombinierten Hub- und Verriegelungsantriebs, erfordert aber einen ungünstig hohen Bauaufwand für die drehfeste Arretierung der Verriegelungsmutter sowie die aus mehreren, abgestuft nachgiebigen Einzelfedern bestehende Federanordnung.

Aufgabe der Erfindung ist es, den Schließmechanismus der eingangs genannten Art so auszubilden, dass unter Beibehalt eines wirksamen Überlastschutzes des Hubantriebs der Bauaufwand wesentlich vereinfacht und insbesondere auf selektiv eingerückte Reib- oder Formschlusselemente zwischen Verriegelungsmutter und Formaufspannplatte zur Rückdrehsicherung des Spindeltriebs verzichtet werden kann.

Diese Aufgabe wird erfindungsgemäß durch den Schließmechanismus mit den im Patentanspruch 1 angegebenen Merkmalen gelöst.

Bei dem erfindungsgemäßen Schließmechanismus geraten einerseits eine gesonderte, selektiv einrückbare Reibbremse oder Formschlusskupplung zwischen Verriegelungsmutter und beweglicher Formaufspannplatte und andererseits eine aus mehreren, abgestuft wirkenden Einzelfedern bestehende Federanordnung dadurch in Fortfall, dass die spielbehaftete Gewindeverbindung zwischen Verriegelungsmutter und Aufspannplatte aufgrund einer entsprechenden Gewindesteigung und ―reibung unter Schließkraftwirkung selbsthemmend ausgebildet und zur rückdrehsicheren Arretierung der Verriegelungsmutter genutzt wird. Dennoch bleibt die Schließkraftentlastung des Hubantriebs in vollem Umfang erhalten.

Weitere vorteilhafte Ausgestaltungen der Erfindung ergeben sich aus den Unteransprüchen. So lassen sich die Hubbewegung und die Schließkraftverriegelung der Aufspannplatte zwar - wie aus der eingangs erwähnten Druckschrift bekannt - mit einem einzigen Spindeltrieb durchführen, jedoch besteht ohne weiteres die Möglichkeit, für beide Funktionen getrennte Getriebezüge zu verwenden, wobei als Hubantrieb dann außer einem Spindeltrieb alternativ auch ein Zahlstangen- oder Hydraulikantrieb, der synchron mit dem Verriegelungs-Spindeltrieb verkoppelt ist, zum Einsatz kommen kann. In diesem Fall lässt sich der Schließmechanismus sogar völlig federfrei gestalten, wenn auch im Zuge des Hubantriebs vorzugsweise eine der Hubkraft entsprechend vorgespannte Federanordnung, etwa ein Tellerfederpaket oder eine drehnachgiebige Kupplung, angeordnet ist, um das erforderliche Gewindespiel zwischen Verriegelungsmutter und Spindelwelle möglichst klein zu halten.

Die Erfindung wird nunmehr anhand zweier Ausführungsbeispiele in Verbindung mit den Zeichnungen näher erläutert. Es zeigen in stark schematisierter Darstellung:
- **Fig. 1**: eine Schließeinheit einer Spritzgießmaschine einschließlich eines erfindungsgemäßen Schließmechanismus in perspektivischer Darstellung;
- **Fig. 2**: eine geschnittene Teilansicht des Schließmechanismus gemäß Fig. 1 in vergrößerter Darstellung;
- **Fig. 3a, b**: einen gegenüber Fig. 2 nochmals vergrößerten Ausschnitt einer Gewindeverbindung zwischen Verriegelungsmutter und Spindelwelle im spielbehafteten Zustand (a) und mit Flankenkontakt (b); und
- **Fig. 4a, b**: einen kombinierten Hub- und Verriegelungsantrieb im Schnitt (a) und im vergrößerten Maßstab im Bereich der Gewindeverbindung (b).

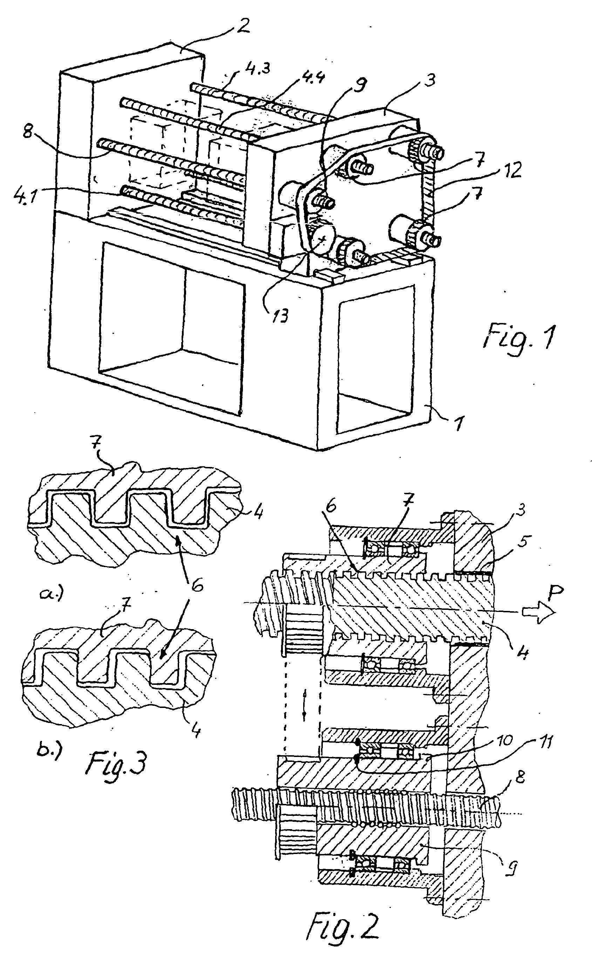

Fig. 1 zeigt eine Schließeinheit für eine Spritzgießmaschine mit einer fest mit dem Maschinenbett 1 verbundenen Formaufspannplatte 2 und einer auf dem Maschinenbett 1 linear beweglich gelagerten Formaufspannplatte 3. Die Formaufspannplatten 2 und 3 sind über vier drehfeste Holme 4 miteinander verbunden, die an ihren die Formaufspannplatte 2 axial verschieblich durchgreifenden Enden durch eine Schließkraftaufbauvorrichtung (nicht gezeigt), etwa in Form von den Holmen 4 jeweils zugeordneten, hydraulischen Kolben-Zylindereinheiten auf der Plattenrückseite zugkraftbeaufschlagbar sind.

Auf Seiten der beweglichen Formaufspannplatte 3 sind die Holme 4 als Spindelwellen 4.1 bis 4.4 ausgebildet und unter Zwischenlage von Gleithülsen 5 (Fig. 2) durch die Formaufspannplatte 3 geführt Mit den Spindelwellen 4.1 bis 4.4 sind jeweils über spielbehaftete Gewindeverbindungen 6 mit Rechteckprofil Verriegelungsmuttern 7 verschraubt, welche drehbar, aber axial unverschieblich an der Formaufspannplatte 3 gelagert sind.

Der Hubantrieb für die Formaufspannplatte 3 besteht bei diesem Ausführungsbeispiel ebenfalls aus einem Spindeltrieb mit einer fest mit der Formaufspannplatte 2 verbundenen Spindelwelle 8, die an ihrem die Aufspannplatte 3 durchgreifenden Ende mit einer Kugelmutter 9 in Eingriff steht. Diese ist an der Formaufspannplatte 3 drehbar, aber zwischen einem Anschlag 10 und einem Sprengring 11 axial begrenzt verschieblich gelagert, wobei das axiale Bewegungsspiel der Kugelmutter 9 gegenüber der Aufspannplatte 3 kleiner als das Gewindespiel der Gewindeverbindung 6 gewählt wird. Die Verriegelungsmuttern 7 und die Kugelmutter 8 werden von einem Elektromotor 13 über einen Zahnriemen 12 synchron angetrieben. Die gegenseitige Drehlage der Muttern 7, 9 ist so abgestimmt, dass die Verriegelungsmuttern 7 mit den Spindelwellen 4.1 bis 4.4 keinen Flankenkontakt besitzen, solange die Holme 4 nicht.schließkraftbeaufschlagt sind (Fig. 3a). Die Kugelmutter 9 hingegen läuft bei Erregung des Elektromotors 13 im Wesentlichen spielfrei auf der Spindelwelle 8 und verfährt dadurch die Aufspannplatte 3 je nach Drehrichtung des Elektromotors 13 entweder auf dem Weg über den Anschlag 10 in Öffnungs- oder auf dem Weg über den Sprengring 11 in Schließrichtung.

In der Schließlage der Aufspannplatten 2, 3, in der die - in Fig. 1 gestrichelt dargestellten - Formwerkzeughälften zusammengefahren sind, wird der Elektromotor 13 abgeschaltet. Dabei befindet sich die Kugelmutter 9 zunächst noch in der in Fig. 2 gezeigten Anschlaglage am Sprengring 11 und die Gewindeverbindungen 6 außer Flankenkontakt (Fig. 3a). Nunmehr wird die Schließkraftaufbauvorrichtung aktiviert und dadurch werden die Holme 4 in Pfeilrichtung P gezogen und die Gewindeflanken der Gewindeverbindungen 6 in Kontakt gebracht (Fig. 3b), so dass die Schließkraft an die Verriegelungsmuttern 7 übertragen wird. Die Eingriffslänge der Gewindeverbindungen 6 ist so groß gewählt, dass die zulässige Flächenpressung an den Gewindeflanken unter Schließkraftwirkung nicht überschritten wird, und die Gewindeverbindungen 6 sind durch entsprechende Wahl der Gewindesteigung und des Reibungsfaktors der Gewindeflanken unter Schließkraftwirkung selbsthemmend ausgebildet, so dass die auf die Holme 4 ausgeübten Schließkräfte über die auf diese Weise rückdrehsicher arretierten Verriegelungsmuttern 7 und die zugehörigen Lagerstellen an die bewegliche Formaufspannplatte 3 übertragen werden. In Folge des axialen Bewegungsspiel bleibt die Kugelmutter 9 dabei vor Kraftrückwirkungen geschützt.

Nach Beendigung der Einspritzphase wird die Schließkraftaufbauvorrichtung gelöst und der Elektromotor 13 eingeschaltet, so dass die Gewindeverbindungen 6 erneut in den kontaktfreien Zustand gelangen und die Kugelmutter 9 und - nach Durchlaufen des durch den Anschlag 10 begrenzten Bewegungsspiels - die Aufspannplatte 3 in Öffnungsrichtung verfahren werden. Dabei verbleiben die Gewindeverbindungen 6 wegen der drehlagenfesten Verkoppelung der Verriegelungsmuttern 7 mit der Kugelmutter 9 im kontaktfreien Zustand.

Um das erforderliche Gewindespiel der Gewindeverbindungen 6 zu reduzieren, kann die Kugelmutter 9 unter Federvorspannung, etwa durch nicht gezeigte Tellerfedern, axial begrenzt beweglich mit der Aufspannplatte 3 verbunden sein. Die Federvorspannung wird entsprechend der zum Schließen und Öffnen der Aufspannplatte 3 erforderlichen Hubkraft gewählt, so dass die Tellerfedern nur nachgeben, wenn von Seiten der Aufspannplatte 3 eine die Federvorspannung überschreitende Schließkraft auf die Kugelmutter 9 einwirkt. Eine weitere Modifikation besteht darin, dass als Hubantrieb für die Aufspannplatte 3 anstelle des Spindeltriebs 8, 9 ein Zahnstangentrieb mit einem über ein Winkelgetriebe vom Elektromotor 13 angetriebenen Ritzel und einer am Maschinenbett 1 befestigten Zahnstange vorgesehen ist. In diesem Fall ist anstelle des oben erwähnten Tellerfederpakets eine unter Schließkraftwirkung drehnachgiebige Kupplung im Zuge des Winkelgetriebes angeordnet. Schließlich kann für die Hubbewegung der Aufspannplatte 3 alternativ zum Spindeltrieb 8, 9 und Elektromotor 13 eine hydraulische oder pneumatische Kolben-Zylindereinheit vorgesehen sein, wobei der Zahnriemen 12 und somit die Verriegelungsmuttern 7 dann durch einen die Linearbewegung der Aufspannplatte 3 abgreifenden Hub-/Drehwandler, etwa ein mit einer am Maschinenbett 1 befestigten Zahnstange kämmendes Ritzel, angetrieben werden.

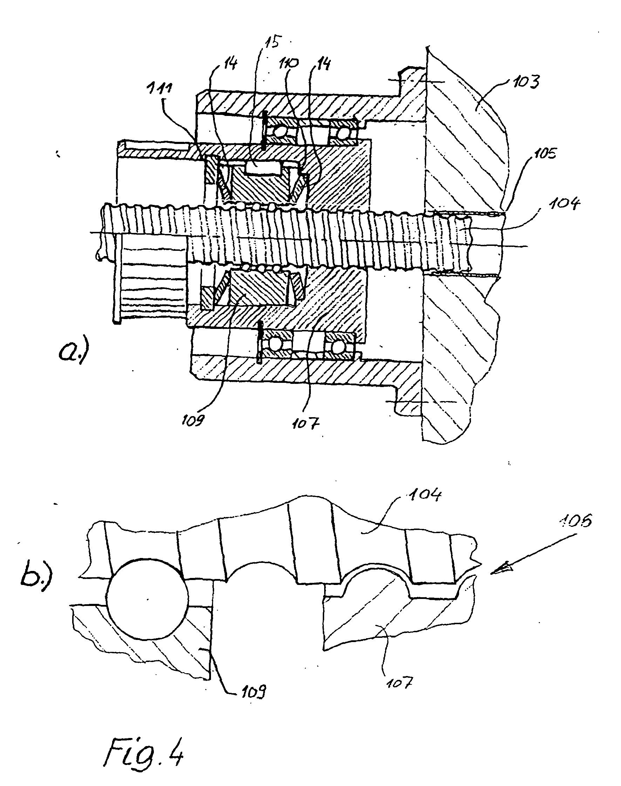

Das in Fig. 4 gezeigte Ausführungsbeispiel, wo die dem Schließmechanismus nach den Fig. 1 bis 3 entsprechenden Komponenten durch ein um 100 erhöhtes Bezugszeichen gekennzeichnet sind, unterscheidet sich von diesem in erster Linie dadurch, dass die Kugelmutter 109 auf dem gleichen Holm 104 wie die Verriegelungsmutter 107 läuft, also die Spindelwelle 8 gemäß Fig. 1 und 2 entfällt, und dass ferner die Kugelmutter 109 über die oben erwähnten, vorgespannten Tellerfederpakete 14 und eine drehfeste, aber axial bewegliche Gleitz.B. eine Nut-Federverbindung 15 mit der Verriegelungsmutter 107 und über diese mit der Aufspannplatte 103 verkoppelt ist, wobei der synchrone Antrieb von Verriegelungs- und Kugelmutter 107, 109 wiederum durch einen Zahnriemen erfolgt. Wie Fig. 4b zeigt, besitzt die Spindelwelle 104 ein mit der Kugelmutter 109 im Wesentlichen spielfrei zusammenwirkendes Kugelgewinde 106 und dementsprechend sind die mit dem Kugelgewinde 106 beim Öffnen und Schließen der Aufspannplatte 103 spielbehaftet zusammenwirkenden Gewindeflanken der Verriegelungsmutter 107 ebenfalls teilkugelförmig gestaltet. Wahlweise kann die Spindelwelle 104 zweigängig ausgebildet sein, nämlich mit einem Kugelgewindegang für die Kugelmutter 109 und einem Rechteck-Gewindegang für die mit einem entsprechenden Rechteck-Gewindeprofil versehene Verriegelungsmutter 107. Im Übrigen ist die Bau- und Funktionsweise dieses Schließmechanismus die gleiche wie beim ersten Ausführungsbeispiel.

## Patentansprüche

1. Schließmechanismus für die Schließeinheit einer Spritzgießmaschine mit einem Hubantrieb zum Antrieb einer relativ zu einer feststehenden Formaufspannplatte (2) linear verfahrbaren Gegenplatte (3), einer in der Schließlage der Gegenplatte aktivierten Schließkraftaufbauvorrichtung und einer zwischen dieser und der Gegenplatte schließkraftübertragenden Schließkraftverriegelung, wobei der Hubantrieb (8, 9) begrenzt beweglich mit der Gegenplatte verkoppelt und als Schließkraftverriegelung ein synchron zum Hubantrieb mitlaufender Spindeltrieb mit einer Spindelwelle (4.1-4.4) und einer mit dieser über eine Gewindeverbindung spielbehaftet, unter Schließkraftwirkung jedoch lastübertragend zusammenwirkenden und drehfest arretierten Verriegelungsmutter (7) vorgesehen ist, **dadurch gekennzeichnet, dass**
die Verriegelungsmutter (7; 107) unter Schließkraftwirkung über die dann spielfrei wirkende, kraftschlüssig selbsthemmende Gewindeverbindung (6; 106) rückdrehfest an der Spindelwelle (4; 104) gesichert ist.

2. Schließmechanismus nach Anspruch 1, **dadurch gekennzeichnet, dass** der Hubantrieb (104, 109) über eine der Hubkraft entsprechend vorgespannte Federanordnung (14) begrenzt beweglich mit der Gegenplatte (103) verkoppelt ist.

3. Schließmechanismus nach Anspruch 2, **dadurch gekennzeichnet, dass** die Federanordnung (14) aus Tellerfedern besteht.

4. Schließmechanismus nach Anspruch 2, **dadurch gekennzeichnet, dass** der Hubantrieb (8, 9) eine drehnachgiebige Kupplung als Federanordnung enthält.

5. Schließmechanismus nach einem der vorhergehenden Ansprüche, **dadurch gekennzeichnet, dass**
die Verriegelungsmutter (7; 107) rotierend angetrieben und die Spindelwelle (4; 104) drehfest angeordnet ist.

6. Schließmechanismus nach Anspruch 5, **dadurch gekennzeichnet, dass** der Spindeltrieb (4, 7) aus mehreren, zueinander parallelen, zur Linearführung der Gegenplatte (3) diese durchgreifenden, drehfesten Spindelwellen (4.1 bis 4.4) mit diesen jeweils zugeordneten, rotierend angetriebenen Verriegelungsmuttern (7) besteht.

7. Schließmechanismus nach einem der vorhergehenden Ansprüche, **dadurch gekennzeichnet, dass**
der Hubantrieb ebenfalls als Spindeltrieb (8, 9; 104, 109) ausgebildet ist.

8. Schließmechanismus nach Anspruch 7, **dadurch gekennzeichnet, dass** der Hubantrieb als Kugelspindeltrieb (8, 9; 104, 109) ausgebildet ist.

9. Schließmechanismus nach Anspruch 7 oder 8, **dadurch gekennzeichnet, dass**
beide Spindeltriebe eine gemeinsame Spindelwelle (104) mit einer mit dieser im Wesentlichen spielfrei zusammenwirkenden Spindelmutter (109) für die Hubbewegung und einer spielbehaftet mitlaufenden Verriegelungsmutter (107) für die Schließkraftverriegelung der Gegenplatte (103) aufweisen.

10. Schließmechanismus nach Anspruch 9, **dadurch gekennzeichnet, dass** die Spindelwelle (104) zweigängig mit jeweils einem Gewindegang für eine der beiden Spindelmuttern (107; 109) ausgebildet ist.

11. Schließmechanismus nach einem der Ansprüche 1 bis 6, **dadurch gekennzeichnet, dass**
der Hubantrieb ein Zahnstangentrieb ist.

12. Schließmechanismus nach einem der Ansprüche 1 bis 6, **dadurch gekennzeichnet, dass**
der Hubantrieb als Hydraulikantrieb ausgebildet und der Spindeltrieb (4, 7) von diesem unter Zwischenschaltung eines mechanischen Hub-/-Drehwandlers angetrieben ist.

## Claims

1. A closing mechanism for the closing unit of an injection moulding machine, having a hoist drive for driving a die platen (3) that is movable in a straight line relative to a fixed, mould clamping platen (2), a device for exerting closing force that is activated when the die platen is in the closed position, and a closing force locking mechanism that transfers the closing force between the device for exerting the force and the die platen, wherein the hoist drive (8, 9) is coupled with the die platen in movement limiting manner, and the closing force locking mechanism is realised as a spindle drive running synchronously with the hoist drive, having a spindle shaft (4.1-4.4) and a locking nut (7) with backlash that is connected thereto, but which cooperates in load-transferring manner therewith and is locked in torque-proof manner when closing force is exerted,
**characterised in that**
when closing force is exerted, the locking nut (7; 107) is fixed without reverse rotation on the spindle shaft (4; 104) via the threaded connection (6; 106) which then operates without backlash and is self-limiting with non-positive locking.

2. The closing mechanism as recited in claim 1,
**characterised in that**
the hoist drive (104, 109) is coupled with the die platen (103) in movement limiting manner via a spring device (14) that is pretensioned in correspondence with the lift force.

3. The closing mechanism as recited in claim 2,
**characterised in that**
the spring device (14) consists of disc springs.

4. The closing mechanism as recited in claim 2,
**characterised in that**
the hoist drive (8, 9) includes a rotationally elastic coupling as the spring device.

5. The closing mechanism as recited in any of the preceding claims,
**characterised in that**
the locking nut (7; 107) is driven in rotary manner and the spindle shaft (4; 104) is fixed in torque-proof manner.

6. The closing mechanism as recited in claim 5,
**characterised in that**
the spindle drive (4, 7) consists of a plurality of torque-proof spindle shafts (4.1 to 4.4) that are parallel to each other and pass through the die platen (3) for linear guidance thereof with rotationally driven locking nuts (7) allocated to each.

7. The closing mechanism as recited in any of the preceding claims,
**characterised in that**
the hoist drive is also configured as a spindle drive (8, 9; 104, 109).

8. The closing mechanism as recited in claim 7,
**characterised in that**
the hoist drive is configured as a ball spindle drive (8, 9; 104, 109).

9. The closing mechanism as recited in claim 7 or 8,
**characterised in that**
both spindle drives have a common spindle shaft (104) with a spindle nut (109) cooperating therewith in essentially backlash-free manner for the lifting movement, and a travelling locking nut (107) with backlash for the closing force locking of the die platen (103).

10. The closing mechanism as recited in claim 9,
**characterised in that**
the spindle shaft (104) is configured with a dual thread, with one thread each for the two spindle nuts (107; 109).

11. The closing mechanism as recited in any of claims 1 to 6,
**characterised in that**
the hoist drive is a toothed rack drive.

12. The closing mechanism as recited in any of claims 1 to 6.
**characterised in that**
the hoist drive is configured as a hydraulic drive unit and the spindle drive (4, 7) is driven thereby via the intermediary of a mechanical linear-to-rotary motion converter.

## Revendications

1. Mécanisme de fermeture pour l'unité de fermeture d'une machine de moulage par injection, comportant une commande de levage pour l'entraînement d'une plaque conjuguée (3) pouvant se déplacer linéairement par rapport à une plaque de montage de moule fixe (2) d'un dispositif de génération de force de fermeture activé en position de fermeture de la plaque conjuguée et d'un système de verrouillage par force de fermeture transmettant la force de fermeture entre ce dispositif de génération de force de fermeture et la plaque conjuguée, la commande de levage (8, 9) étant couplée avec une mobilité limitée à la plaque conjuguée et étant prévu comme système de verrouillage par force de fermeture une transmission fonctionnant de manière synchrone avec la commande de levage et comportant un arbre de broche (4.1 - 4.4) et un écrou de verrouillage (7) coopérant avec du jeu avec cet arbre à broche par une connexion filetée mais en transmettant la charge sous l'effet de la force de fermeture et bloqué de manière fixe en rotation, **caractérisé en ce que**
l'écrou de verrouillage (7 ; 107) est bloqué sous l'effet de la force de fermeture par la connexion filetée (6 ; 106) agissant alors sans jeu et autobloquante par correspondance mécanique, sans pouvoir être tourné en retour, sur l'arbre de broche (4 ; 104).

2. Mécanisme de fermeture selon la revendication 1, **caractérisé en ce que** la commande de levage (104, 109) est couplée, par un dispositif à ressort (14) précontraint en fonction de la force de levage, avec une mobilité limitée à la plaque conjuguée (103) .

3. Mécanisme de fermeture selon la revendication 2, **caractérisé en ce que** le dispositif à ressort (14) est composé de rondelles à ressort.

4. Mécanisme de fermeture selon la revendication 2, **caractérisé en ce que** la commande de levage (8, 9) inclut un couplage souple à la rotation comme dispositif à ressort.

5. Mécanisme de fermeture selon une des revendications précédentes, **caractérisé en ce** l'écrou de verrouillage (7 ; 107) est entraîné en rotation et que l'arbre de broche (4 ; 104) est disposé de manière fixe en rotation.

6. Mécanisme de fermeture selon la revendication 5, **caractérisé en ce que** la transmission à broche (4, 7) est composée de plusieurs arbres de broche (4.1 à 4.4) parallèles entre eux, traversant la plaque conjuguée (3) pour la guider linéairement et fixes en rotation, pourvus d'écrous de verrouillage (7) qui leur sont associés et entraînés en rotation.

7. Mécanisme de fermeture selon une des revendications précédentes, **caractérisé en ce que** la commande de levage est réalisée également sous forme d'une transmission à broche (8, 9 ; 104, 109) .

8. Mécanisme de fermeture selon la revendication 7, **caractérisé en ce que** la commande de levage est réalisée sous forme d'une transmission à broche à bille (8, 9 ; 104, 109).

9. Mécanisme de fermeture selon la revendication 7 ou 8, **caractérisé en ce que**
les deux transmissions à broche présentent un arbre de broche commun (104) comportant un écrou de broche (109) coopérant sensiblement sans jeu avec celui-ci pour le mouvement de levage et un écrou de verrouillage (107) fonctionnant avec et sans jeu pour le verrouillage par force de fermeture de la plaque conjuguée (103).

10. Mécanisme de fermeture selon la revendication 9, **caractérisé en ce que** l'arbre de broche (104) est réalisé avec deux pas avec respectivement un pas fileté pour un des deux écrous de broche (107 ; 109).

11. Mécanisme de fermeture selon une des revendications 1 à 6, **caractérisé en ce que**
la commande de levage est une transmission à crémaillère.

12. Mécanisme de fermeture selon une des revendications 1 à 6, **caractérisé en ce que**
la commande de levage est réalisée sous forme d'une commande hydraulique et que la transmission à broche (4, 7) est entraînée par celle-ci avec interposition d'un convertisseur d'un levage en une rotation.
